**Europäisches Patentamt**

**European Patent Office**

**Office européen des brevets**

(19)

(11) Veröffentlichungsnummer : **0 201 786**
**B1**

(12) **EUROPÄISCHE PATENTSCHRIFT**

(45) Veröffentlichungstag der Patentschrift :
02.11.89

(51) Int. Cl.⁴ : **A 01 B 59/041, A 01 B 59/06**

(21) Anmeldenummer : 86105779.2

(22) Anmeldetag : 25.04.86

(54) Geräteanbauvorrichtung für Ackerschlepper.

(30) Priorität : 15.05.85 DE 3517489

(43) Veröffentlichungstag der Anmeldung :
20.11.86 Patentblatt 86/47

(45) Bekanntmachung des Hinweises auf die Patenterteilung : 02.11.89 Patentblatt 89/44

(84) Benannte Vertragsstaaten :
DE FR GB

(56) Entgegenhaltungen :
AT—B— 272 721
DE—A— 2 931 656
FR—A— 2 489 650

(73) Patentinhaber : Klöckner-Humboldt-Deutz Aktiengesellschaft
Deutz-Mülheimer-Strasse 111 Postfach 80 05 09
D-5000 Köln 80 (DE)

(72) Erfinder : Schmidtbetz, Klaus
Griesberger Strasse 9
D-5000 Köln 71 (DE)

## Beschreibung

Die Erfindung bezieht sich auf eine Geräteanbauvorrichtung für Ackerschlepper mit einem oberen sowie zwei unteren Lenkern, von denen letztere in Arbeitsstellung seitlich beweglich mit dem Schlepperrumpf oder daran befestigten Teilen verbunden und ferner mittels Stützen oder dergl. seitenstabil bzw. seitenbeweglich einstellbar sind.

Es ist aus der DE-A-30 33 741 eine Geräteanbauvorrichtung genannter Art bekanntgeworden. Aus der DE-A-23 50 096 ist eine andere Geräteanbauvorrichtung bekannt, deren untere Lenker durch je eine Seitenstrebe abgestützt sind. Die beiden Seitenstreben verlaufen zwischen den unteren Lenkern zu einem fahrzeugfesten Lagerbock und sind an diesem mittels Kurbeln einzeln verstellbar gelagert. Hierdurch ist das Maß der zulässigen Seitenbewegung der unteren Lenker stufenlos einstellbar. Kurbeln dieser Bauweise sind jedoch insbesondere bei der Anordnung an kleineren Schleppern wegen der beengten Bauweise schlecht zugänglich, so daß das einstellen der Beweglichkeit der Seitenstreben mittels der Kurbeln Schwierigkeiten bereitet. Außerdem ist eine solche Einrichtung zur Einstellung der Seitenbeweglichkeit der unteren Lenker sehr kostenaufwendig.

Ausgehend von diesen Erkenntnissen liegt der Erfindung die Aufgabe zugrunde, eine Geräteanbauvorrichtung der eingangs umrissenen Gattung zu schaffen, bei der die Einrichtung zur Einstellung der Seitenbeweglichkeit der unteren Lenker gut zugänglich und deren Herstellung mit einfachen Mitteln durchführbar ist.

Die Aufgabe wird erfindungsgemäß dadurch gelöst, daß die beiden unteren Lenker geteilt sind und je ein schlepperseitiges Lenkerteil und ein damit durch ein Gelenk mit vertikaler Schwenkachse verbundenes geräteseitiges Lenkerteil aufweisen, das gegenüber dem schlepperseitigen Lenkerteil durch ein an beiden Lenkerteilen angreifendes Spannelement in seinen Schwenkbewegungen einstellbar bzw. feststellbar ist.

Die gelenkigen Verbindungen der geräteseitigen und der schlepperseitigen Teilstücke der unteren Lenker und deren Spannelemente können gut erreichbar nahe der Anschlußelemente für ein anzuschließendes Arbeitsgerät angeordnet werden. Außerdem lassen sich die erforderlichen Gelenkverbindungen für die Lenkerteilstücke und die dafür vorgesehenen Spannelemente mit einfachsten Mitteln kostengünstig verwirklichen.

In Weiterbildung der Erfindung ist das Spannelement als Gewindespindel ausgebildet, die in einem Lenkerteil in einer Gewindebohrung geführt ist und sich am anderen Lenkerteil abstützt. Dabei ist es zweckdienlich, wenn die einander zugewandten Enden der beiden Lenkerteile abgewinkelt sind und dabei etwa parallel mit Abstand nebeneinander verlaufen.

Ferner ist es zur Einstellung der unteren Lenker auf seitenstabile bzw. seitenbewegliche Führung vorteilhaft, wenn die Gewindespindel in dem abgewinkelten Ende des schlepperseitigen Lenkerteils sitzt und sich an dem mit Abstand verlaufenden abgewinkelten und schwenkbaren Ende des geräteseitigen Lenkerteils abstützt.

Schließlich ist auch die Möglichkeit gegeben, das Spannelement als elektrischen oder hydraulischen Stellmotor auszubilden.

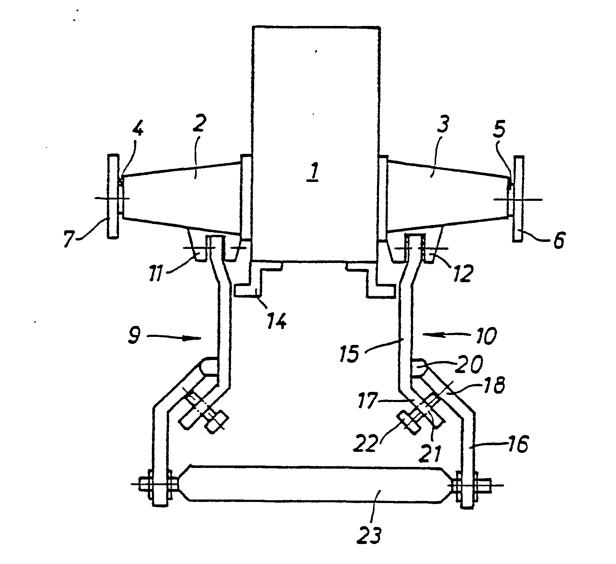

Ein Ausführungsbeispiel der Erfindung wird im folgenden anhand der Zeichnung näher beschrieben. Die einzige Abb. zeigt in Draufsicht eine vereinfachte Darstellung einer Geräteanbauvorrichtung gemäß der Erfindung.

In der Abbildung ist der hintere Bereich eines Schleppergehäuses 1 dargestellt, in dem nicht gezeigte Teile vom Getriebe eines Antriebsaggregats untergebracht sind. An das Schleppergehäuse 1 schließen sich beiderseits Achsrohre 2 und 3 an, die als Tragkörper der aus diesen herausragenden Halbachsen 4 bzw. 5 dienen. Die Halbachsen 4 und 5 weisen endseitig Radflansche 6 bzw. 7 auf, an denen die Treibräder des Schleppers mit ihren Felgen durch Schrauben befestigt sind. Von einer am rückwärtigen Ende des Schleppers vorgesehenen Dreipunkt-Geräteanbauvorrichtung sind beispielsweise die beiden unteren Lenker 9 und 10 dargestellt, welche fahrzeugseitig gelenkig in Lagerböcken 11 bzw. 12 sitzen. Die beiden Lagerböcke 11, 12 sind an je einem der Achsrohre 2 bzw. 3 befestigt. Am Schleppergehäuse sind ferner beiderseits Anschlagböcke 14 angeordnet, die die Bewegungen der unteren Lenker 9 und 10 in dieser Richtung begrenzen. Jeder der beiden unteren Lenker 9 und 10 ist zweiteilig ausgeführt und weist somit ein schlepperseitiges Lenkerteil 15 sowie ein geräteseitiges Lenkerteil 16 auf. Die einander zugewandten Enden 17 und 18 der beiden Lenkerteile 15 bzw. 16 sind parallel zueinander abgewinkelt und durch ein Gelenk 20, das eine vertikale Schwenkachse hat, miteinander verbunden. Im abgewinkelten Ende 17 des Lenkerteils 15 sitzt in einer Gewindebohrung 21 eine Gewindespindel 22, die sich mit ihrem gewindeseitigen Ende an der Innenseite des abgewinkelten Endes 18 des Lenkerteils 16 abstützt. Zwischen den beiden unteren Lenkern 9 und 10 ist geräteseitig anstelle eines Arbeitsgeräts eine Ackerschiene 23 angeschlossen.

Bei dieser Anordnung können die Gewindespindeln 22 der beiden unteren Lenker 9 und 10 wahlweise so eingestellt werden, daß die Ackerschiene 23 oder ein Arbeitsgerät entweder eine starre seitliche Führung hat oder mit einer gegebenen seitlichen Pendelung arbeitet. Dabei ist von besonderem Vorteil, daß die Gewindespindeln 22 sehr bedienungsfreundlich angeordnet sind.

## Patentansprüche

1. Geräteanbauvorrichtung für Ackerschlepper

2

mit einem oberen sowie zwei unteren Lenkern (9, 10), von denen letztere in Arbeitsstellung seitlich beweglich mit dem Schlepperrumpf (1) oder daran befestigten Teilen verbunden und ferner mittels Stützen oder dergl. seitenstabil bzw. seitenbeweglich einstellbar sind, dadurch gekennzeichnet, daß die beiden unteren Lenker (9, 10) geteilt sind und je ein schlepperseitiges Lenkerteil (15) und ein damit durch ein Gelenk (20) mit vertikaler Schwenkachse verbundenes geräteseitiges Lenkerteil (16) aufweisen, das gegenüber dem schlepperseitigen Lenkerteil (15) durch ein an beiden Lenkerteilen (15, 16) angreifendes Spannelement (22) in seinen Schwenkbewegungen einstellbar bzw. feststellbar ist.

2. Geräteanbauvorrichtung nach Anspruch 1, dadurch gekennzeichnet, daß das Spannelement als Gewindespindel (22) ausgebildet ist, die in einem Lenkerteil (15) in einer Gewindebohrung (21) geführt ist und sich am anderen Lenkerteil (16) abstützt.

3. Geräteanbauvorrichtung nach den Ansprüchen 1 und 2, dadurch gekennzeichnet, daß die einander zugewandten Enden (17, 18) der beiden Lenkerteile (15 bzw. 16) abgewinkelt sind und dabei etwa parallel mit Abstand nebeneinander verlaufen.

4. Geräteanbauvorrichtung nach einem der vorhergehenden Ansprüche, dadurch gekennzeichnet, daß die Gewindespindel (22) in dem abgewinkelten Ende (17) des schlepperseitigen Lenkerteils (15) sitzt und sich an dem mit Abstand daneben verlaufenden abgewinkelten und schwenkbaren Ende (18) des geräteseitigen Lenkerteils (16) abstützt.

5. Geräteanbauvorrichtung nach Anspruch 1, dadurch gekennzeichnet, daß das Spannelement (22) als elektrischer oder hydraulischer Stellmotor ausgebildet ist.

## Claims

1. An implements-attaching appliance for a tractor, the appliance comprising one upper and two lower guide rods (9, 10), wherein the lower guide rods are connectable to the tractor body (1), or to elements fastened thereto so as to be laterally movable in their working position, and are also laterally settable, by means of brackets or the like, so as to be laterally stable and, respectively, laterally movable, characterized in that each of the two lower guide rods (9, 10) is split into a tractor-connectable rod section (15) and an implements-connectable rod section (16), that the two sections are connected to one another by a joint (20) having a vertical swivel axis, and in that the implements-connectable rod section is adjustable in respect of its swivel motions relative to the tractor-connectable section and, respectively, is lockable by means of a locating/fastening element (22) engaging both rod sections (15, 16).

2. An implements-attaching appliance according to claim 1, characterized in that the locating/fastening element is a threaded spindle (22) which is held in a tapped bore (21) of the one rod section (15) and bears on the other rod section (16).

3. An implements-attaching appliance according to claim 1 or claim 2, characterized in that the two rod sections'(15 and 16) end portions (17, 18) facing each other are angularly offset so as to extend substantially parallel with yet spaced from one another.

4. An implements-attaching appliance according to any of the preceding claims, characterized in that the threaded spindle (22) is located in the offset end portion (17) of the tractor-connectable rod section (15) and bears on the spacedly extending and swivellable end portion (18) of the implements-connectable section (16).

5. An implements-attaching appliance according to claim 1, characterized in that the locating/fastening element (22) is an electrically or hydraulically operable servomotor.

## Revendications

1. Dispositif pour monter des outils pour tracteurs agricoles, avec un bras oscillant supérieur ainsi que deux bras oscillants inférieurs (9, 10), ces derniers étant reliés de manière latéralement mobile, en position de travail, avec la carcasse du tracteur (1) ou des parties fixées sur celui-ci et en outre réglable au moyen d'appuis ou similaires, de manière latéralement stable ou mobile, caractérisé en ce que les deux bras oscillants inférieurs (9, 10) sont divisés et présentent chacun une partie de bras (15) située côté tracteur et une partie de bras (16) située côté appareil, ainsi reliée au moyen d'une articulation (20) à axe de pivotement vertical, réglable et blocable dans ses mouvements de pivotement par rapport à la partie de bras (15) située côté tracteur, au moyen d'un élément de serrage (22) en prise sur les deux parties de bras (15, 16).

2. Dispositif pour monter des outils selon la revendication 1, caractérisé en ce que l'élément de serrage est réalisé sous forme de broche filetée (22), guidée dans un alésage fileté (21) situé dans une partie de bras (15) et s'appuyant sur l'autre partie de bras (16).

3. Dispositif pour monter des outils selon les revendications 1 et 2, caractérisé en ce que les extrémités (17, 18), tournées l'une vers l'autre, des deux parties de bras (15, 16) sont pliées et se développent à peu près parallèlement, à distance l'une à côté de l'autre.

4. Dispositif pour monter des outils selon l'une des revendications précédentes, caractérisé en ce que la broche filetée (22) est placée dans l'extrémité repliée (17) de la partie de bras (15) située côté tracteur et s'appuie sur l'extrémité (18) de la partie de bras (16) située côté appareil extrémité (18) pliée se développant à·côté et à distance, et pivotante.

5. Dispositif pour monter des outils selon la revendication 1, caractérisé en ce que l'élément de serrage (22) est réalisé sous forme de servomoteur électrique ou hydraulique.